# EUROPEAN PATENT SPECIFICATION

(11) **EP 3 404 761 B1**
(45) Date of publication and mention of the grant of the patent: **26.02.2020**
(21) Application number: 18172356.0
(22) Date of filing: 15.05.2018
(51) Int. Cl.: H01M 10/0525, H01M 10/0568, H01M 10/0569, H01M 4/587

(54) **NON-AQUEOUS ELECTROLYTE ELECTRICITY-STORAGE ELEMENT**
ELEKTRIZITÄTSSPEICHERUNGSELEMENT MIT WASSERFREIEM ELEKTROLYT
ÉLÉMENT DE STOCKAGE D'ÉLECTRICITÉ À ÉLECTROLYTE NON AQUEUX

(30) Priority: 16.05.2017 JP 2017097100; 09.03.2018 JP 2018042726
(43) Date of publication of application: 21.11.2018
(73) Proprietor: Ricoh Company, Ltd., Tokyo 143-8555 (JP); National University Corporation Shizuoka University, Shizuoka-shi, Shizuoka 422-8529 (JP)
(72) Inventor: Araki, Yuka, Tokyo, 143-8555 (JP); Abe, Naoto, Tokyo, 143-8555 (JP); Itoh, Yoshio, Tokyo, 143-8555 (JP); Dan, Tatsuya, Tokyo, 143-8555 (JP); Takeshita, Shuhei, Tokyo, 143-8555 (JP); Tanaka, Yasutaka, Shizuoka, 432-8561 (JP)
(74) Representative: SSM Sandmair

(56) References cited:
- EP-A1- 2 827 438
- EP-A1- 3 352 264
- WO-A1-2017/047213
- US-A1- 2004 013 946
- US-A1- 2009 181 301

## Description

### BACKGROUND OF THE INVENTION

### Field of the Invention

The present disclosure relates to a non-aqueous electrolyte electricity-storage element.

### Description of the Related Art

Along with reductions in sizes and improvements in performances of current mobile devices, properties of non-aqueous electrolyte electricity-storage elements having high energy densities have been improved and widely used. Moreover, developments of non-aqueous electrolyte electricity-storage elements having the larger capacities and having excellent safety have been conducted, and the above-described non-aqueous electrolyte electricity-storage elements have started to be mounted in electric vehicles.

Under the above-described circumstances, there is a desire for applying a so-called dual intercalation non-aqueous electrolyte electricity-storage element for practical use as a storage element having high energy density and suitable for high-speed charging and discharging. The dual intercalation storage element uses a carbonaceous material in a positive electrode, and therefore elution of elements etc. from the positive electrode does not occur even with high voltage, and the storage element can be operated stably. However, the dual intercalation storage element has a problem that a large amount of gas is generated when a cycle of charging and discharging is repeated. It is assumed that the generation of gas is caused because decomposition of an electrolyte occurs at an interface between an electrode and the electrolyte.

In order to suppress the above-described decomposition of the electrolyte, developments of electrolytes having high acidity in a high voltage region have been conducted.

In order to improve an anti-oxidation performance of an electrolyte, for example, proposed is a secondary battery cell using dimethyl malonate in an electrolyte of a lithium secondary battery cell system (see, for example, Japanese Unexamined Patent Application Publication No. 08-162154).

In order to improve a battery capacity, moreover, proposed is a non-aqueous electrolyte for a lithium secondary battery cell operated at the maximum voltage of 4.2 V, where a dinitrile compound and an S=O group-containing compound are added to an electrolyte of a lithium secondary cell using lithium cobalt oxide in a positive electrode (see, for example, Japanese Patent No. 5645144).

In order to improve a battery capacity and cycle properties, furthermore, proposed is a non-aqueous electrolyte used for a high voltage secondary battery cell operated at the maximum voltage of 4.35 V in a battery system where at least one of cyclic sulfonic acid ester, disulfonic acid ester, and a nitrile compound is added to the electrolyte of the lithium secondary battery cell using lithium cobalt oxide in a positive electrode, and moreover perfluoroethylene carbonate is further added to the electrolyte (see, for example, Japanese Patent No. 5896010).

The capability of operating a cell at higher voltage gives various advantages that include not only an improvement of energy density, but also a reduction in the number of series connections even when large voltage is required at the time of application to a large-scale machine. Considering applications to automobiles, moreover, an improvement of input-output properties is important as well as an improvement of energy density. In order to improve input-output properties, proposed is a secondary battery cell whose element resistance is reduced by reducing film thicknesses of electrodes (see, for example, Japanese Patent No. 5097415).

US 2009/0181301 A1 discloses a lithium secondary battery including a positive electrode, a negative electrode, a separator separating the positive electrode and the negative electrode, and an electrolyte. The negative electrode active material of the negative electrode includes a material that is capable of reversibly intercalating and deintercalating lithium ions and a metallic material capable of alloying with lithium. The electrolyte includes a chemical compound containing a nitrile (-CN) radical.

EP 2 827 438 A1 discloses a non-aqueous electrolyte suitable for a metal-air battery, comprising a dinitrile solvent and an alkali metal salt. The non-aqueous electrolyte shows stability during the oxygen reduction reaction as well as during oxygen evolution reaction. High degree of reversibility and cyclability is obtained with such electrolyte.

### SUMMARY OF THE INVENTION

The scope of the invention is defined in the appended claims. Any reference to "embodiment (s)", "example (s)" or "aspect (s) of the invention" in this description not falling under the scope of the claims should be interpreted as illustrative example (s) for understanding the invention.

The present disclosure has an object to provide a non-aqueous electrolyte electricity-storage element that can suppress generation of gas without deteriorating properties of the storage element and can improve input-output properties without reducing energy density.

According to one aspect of the present disclosure, a non-aqueous electrolyte electricity-storage element includes a positive electrode including a positive-electrode active material capable of inserting and eliminating anions, a negative electrode including a negative-electrode active material, a non-aqueous electrolyte, and a separator that is disposed between the positive electrode and the negative electrode and retains the non-aqueous electrolyte. The non-aqueous electrolyte includes a dinitrile compound. An amount of the dinitrile compound is 33% by mass or less relative to the non-aqueous electrolyte.

The present disclosure can provide a non-aqueous electrolyte electricity-storage element that can suppress generation of gas without deteriorating properties of the storage element and can improve input-output properties without reducing energy density.

### BRIEF DESCRIPTION OF THE DRAWINGS

FIG. 1 is a schematic cross-sectional view illustrating one example of a non-aqueous electrolyte electricity-storage element of the present disclosure;
FIG. 2 is a schematic view illustrating a basic structure of a three-dimensional network structure in the non-aqueous electrolyte electricity-storage element; and
FIG. 3 is a graph depicting cyclic voltammetry measurement results of the non-aqueous electrolyte electricity-storage elements of Example 1 and Comparative Example 1.

### DESCRIPTION OF THE EMBODIMENTS

### (Non-aqueous electrolyte electricity-storage element)

A non-aqueous electrolyte electricity-storage element of the present disclosure includes a positive electrode including a positive-electrode active material capable of inserting and eliminating anions, a negative electrode including a negative-electrode active material, a non-aqueous electrolyte, and a separator that is disposed between the positive electrode and the negative electrode and retains the non-aqueous electrolyte. The non-aqueous electrolyte includes a dinitrile compound. An amount of the dinitrile compound is 33% by mass or less relative to the non-aqueous electrolyte. The non-aqueous electrolyte electricity-storage element may further include other members according to the necessity.

The non-aqueous electrolyte electricity-storage element of the present disclosure has been accomplished based on the insights that according to the technologies in the art, a positive-electrode active material for a lithium secondary battery cell known in the art, such as lithium cobalt oxide, is used and there is a problem where a capacity is reduced from an initial stage of charging and discharging and cycle properties are significantly deteriorated, when a dinitrile compound is added to a system produced using the positive-electrode active material for the lithium secondary battery cell. It is assumed that this is because a transition metal in the positive-electrode active material reacts with the dinitrile compound. Therefore, the present disclosure is based on the insights that the technologies in the art have not yet satisfied desired safety and long-term cycle properties.

The present inventors have diligently performed researches in order to solve the above-described problems. As a result, the present inventors have found that a storage element having high safety can be provided without causing deteriorations of battery properties due to elution of a transition metal or generation of gas due to decomposition of an electrolyte even for use in a high voltage region by using the electrolyte having high-voltage resistance in a dual intercalation non-aqueous electrolyte electricity-storage element.

Each of constitutional members of the non-aqueous electrolyte electricity-storage element of the present disclosure will be described in detail.

### <Positive electrode>

The positive electrode is not particularly limited and may be appropriately selected depending on the intended purpose, as long as the positive electrode includes a positive-electrode electricity-storing material (e.g., a positive-electrode active material). Examples of the positive electrode include a positive electrode in which a positive electrode material including a positive-electrode active material is disposed on a positive-electrode collector.

A shape of the positive electrode is not particularly limited and may be appropriately selected depending on the intended purpose. Examples of the shape include a plate shape.

### -Positive electrode material-

The positive electrode material is not particularly limited and may be appropriately selected depending on the intended purpose. For example, the positive electrode material includes at least a positive-electrode active material and may further include a conduction auxiliary agent, a binder, a thickening agent, etc. according to the necessity.

### --Positive-electrode active material--

The positive-electrode active material is not particularly limited as long as the positive-electrode active material is a material capable of inserting and eliminating anions, and may be appropriately selected depending on the intended purpose. The positive-electrode active material includes a carbon material.

### ---Carbon material---

Examples of the carbon materials include graphite, such as cokes, artificial graphite and natural graphite, and pyrolysates of organic materials under various thermal decomposition conditions. Among the above-listed examples, preferable is use of porous carbon having communicating pores (mesopores) constituting a three-dimensional network structure, where the porous carbon can prevent expansion or contraction of a cross-section of an electrode when anions are inserted or eliminated.

When the porous carbon has a three-dimensional network structure, ions can move smoothly and a surface area is increased, hence high-speed charging and discharging properties can be improved.

The positive-electrode active material having communicating mesopores constituting a three-dimensional network structure is a capacitor, in which an electric double layer is formed by a pair of positive and negative electrolyte ions that are present over both sides of face where mesopores (voids) and a carbon material area are brought into contact with each other. Therefore, it can be understood that movements of electrolyte ions present as a pair are faster than the movements of electrolyte ions generated after a sequential chemical reaction with an electrode active material, and an ability of supplying electricity depends on, not only a size of a volume of the voids, but also a size of a surface area of mesopores, which allows a pair of positive and negative electrolyte ions to be present.

The mesopores preferably constitute a three-dimensional network structure. When the mesopores constitute a three-dimensional network structure, ions move smoothly.

The mesopores are preferably open pores.

The open pores preferably have a structure where pores are continuous pores. When the open pores have the above-mentioned structure, ions move smoothly.

A BET specific surface area of the carbon material is 50 m²/g or greater, more preferably 50 m²/g or greater but 2,000 m²/g or less, and furthermore preferably 800 m²/g or greater but 1,800 m²/g or less.

When the BET specific surface area is 50 m²/g or greater, a sufficient amount of pores is formed and ions are sufficiently inserted. Therefore, a high capacity can be obtained. When the BET specific surface area is 2,000 m²/g or less, mesopores are sufficiently formed and insertion of ions is not inhibited. Therefore, a high capacity can be obtained.

For example, the BET specific surface area can be determined by performing measurement by means of an automatic specific surface area/porosity distribution analyzer (TriStarII3020, available from Shimadzu Corporation), and determining the BET specific surface area from the measurement result of adsorption isotherm according to the BET (Brunauer, Emmett, Teller) method.

A pore volume of the carbon material is 0.2 mL/g or greater but 2.3 mL/g or less. When the pore volume is 0.2 mL/g or greater, mesopores rarely become independent pores, and a large discharge capacity can be obtained without inhibiting movements of anions. When the pore volume of the carbon material is 2.3 mL/g or less, the carbon structure does not becomes bulky to thereby enhance the energy density of the carbon material as an electrode, and a discharge capacity per unit volume can be increased. Moreover, carbonaceous walls constituting the pores do not become thin, shapes of the carbonaceous walls can be maintained, even when accumulation and release of anions are repeated, and charging and discharging properties can be improved. Therefore, the above-mentioned pore volume is advantageous.

For example, the pore volume of the carbon material can be determined by performing measurement by means of an automatic specific surface area/porosity distribution analyzer (TriStarII3020, available from Shimadzu Corporation), and determining the pore volume from the measurement result of adsorption isotherm according to the BJH (Barrett, Joyner, Hallender) method.

The carbon material may be appropriately produced for use, or appropriately selected from commercial products. Examples of the commercial products include CNovel (registered trademark) (available from Toyo Tanso Co., Ltd.).

### --Binder and thickening agent--

The binder and the thickening agent are not particularly limited and may be appropriately selected depending on the intended purpose, as long as the binder and the thickening agent are materials stable to a solvent used during production of an electrode, to an electrolyte, or to applied potential. Examples of the binder and the thickening agent include fluorobinders (e.g., polyvinylidene fluoride (PVDF) and polytetrafluoroethylene (PTFE)), ethylene-propylene-butadiene rubber (EPBR), styrene-butadiene rubber (SBR), isoprene rubber, acrylate-based latex, carboxymethyl cellulose (CMC), methyl cellulose, hydroxymethyl cellulose, ethyl cellulose, polyacrylic acid, polyvinyl alcohol, alginic acid, oxidized starch, starch phosphate, and casein. The above-listed examples may be used alone or in combination. Among the above-listed examples, fluorobinders (e.g., polyvinylidene fluoride (PVDF) and polytetrafluoroethylene (PTFE)), acrylate-based latex, and carboxymethyl cellulose (CMC) are preferable.

### --Conduction auxiliary agent--

Examples of the conduction auxiliary agent include metal materials (e.g., copper and aluminium) and carbon materials (e.g., carbon black, acetylene black, and carbon nanotubes). The above-listed examples may be used alone or in combination.

### -Positive-electrode collector-

A material, shape, size, and structure of the positive-electrode collector are not particularly limited and may be appropriately selected depending on the intended purpose.

The material of the positive-electrode collector is not particularly limited and may be appropriately selected depending on the intended purpose, as long as the positive-electrode collector is formed of a conductive material and is stable to applied potential. Examples of the material include stainless steel, nickel, aluminium, titanium, and tantalum. Among the above-listed examples, stainless steel and aluminium are preferable.

The shape of the positive-electrode collector is not particularly limited and may be appropriately selected depending on the intended purpose.

The size of the positive-electrode collector is not particularly limited and may be appropriately selected depending on the intended purpose, as long as the size is a size usable for a non-aqueous electrolyte electricity-storage element.

### <Production of positive electrode>

The positive electrode can be produced by adding the binder, the thickening agent, the conductive auxiliary agent, a solvent, etc., according to the necessity, to the positive-electrode active material to form a positive electrode material in the form of slurry, applying the positive electrode material onto the positive-electrode collector, and drying the applied positive electrode material. The solvent is not particularly limited and may be appropriately selected depending on the intended purpose. Examples of the solvent include aqueous solvents and organic solvents. Examples of the aqueous solvents include water and alcohols. Examples of the organic solvents include N-methyl-2-pyrrolidone (NMP) and toluene.

Note that, the positive electrode active material may be subjected to roll molding as it is to form a sheet electrode, or to compression molding to form a pellet electrode.

### <Negative electrode>

The negative electrode is not particularly limited and may be appropriately selected depending on the intended purpose, as long as the negative electrode includes a negative-electrode electricity-storing material (e.g., a negative-electrode active material). Examples of the negative electrode include a negative electrode in which a negative electrode material including a negative-electrode active material is disposed on a negative-electrode collector.

A shape of the negative electrode is not particularly limited and may be appropriately selected depending on the intended purpose. Examples of the shape include a plate shape.

### -Negative electrode material-

The negative electrode material includes at least a negative-electrode active material and may further include a conduction auxiliary agent, a binder, a thickening agent, etc. according to the necessity.

### -Negative-electrode active material-

The negative-electrode active material is not particularly limited and may be appropriately selected depending on the intended purpose, as long as the negative-electrode active material is capable of accumulating and releasing cations in a non-aqueous solvent system. Examples of the negative-electrode active material include carbon materials capable of accumulating and releasing lithium ions as cations, metal oxides, metals or metal alloys capable of forming an alloy with lithium, composite alloy compounds including a metal capable of forming an alloy with lithium, an alloy including lithium, and lithium, and metal lithium nitride.

The carbon material is not particularly limited and may be appropriately selected depending on the intended purpose. Examples of the carbon material include graphite, and pyrolysates of organic materials under various thermal decomposition conditions.

Examples of the graphite include cokes, artificial graphite, and natural graphite. Among the above-listed examples, artificial graphite and natural graphite are preferable.

Examples of the metal oxide include antimony tin oxide, and silicon monoxide.

Examples of the metal or metal alloy include lithium, aluminium, tin, silicon, and zinc.

Examples of the composite alloy compound with lithium include lithium titanate.

Examples of the metal lithium nitride include cobalt lithium nitride.

The above-listed negative-electrode active materials may be used alone or in combination. Among the above-listed examples, a carbon material, lithium titanate, and a combination thereof are preferable in view of safety and cost.

### --Binder and thickening agent--

The binder and the thickening agent are not particularly limited and may be appropriately selected depending on the intended purpose, as long as the binder and the thickening agent are materials stable to a solvent used during production of an electrode, to an electrolyte, or to applied potential. Examples of the binder and the thickening agent include fluorobinders (e.g., polyvinylidene fluoride (PVDF) and polytetrafluoroethylene (PTFE)), ethylene-propylene-butadiene rubber (EPBR), styrene-butadiene rubber (SBR), isoprene rubber, acrylate-based latex, carboxymethyl cellulose (CMC), methyl cellulose, hydroxyl methylcellulose, ethyl cellulose, polyacrylic acid, polyvinyl alcohol, alginic acid, oxidized starch, starch phosphate, and casein. The above-listed examples may be used alone or in combination. Among the above-listed examples, fluorobinders (e.g., polyvinylidene fluoride (PVDF) and polytetrafluoroethylene (PTFE)), styrene-butadiene rubber (SBR) and carboxymethyl cellulose (CMC) are preferable.

### --Conduction auxiliary agent--

Examples of the conduction auxiliary agent include metal materials (e.g., copper and aluminium) and carbon materials (e.g., carbon black, acetylene black, and carbon nanotubes). The above-listed examples may be used alone or in combination.

### -Negative-electrode collector-

A material, shape, size, and structure of the negative-electrode collector are not particularly limited and may be appropriately selected depending on the intended purpose.

The material of the negative-electrode collector is not particularly limited and may be appropriately selected depending on the intended purpose, as long as the negative-electrode collector is formed of a conductive material and is stable to applied potential. Examples of the material include stainless steel, nickel, aluminium, and copper. Among the above-listed examples, stainless steel, copper, and aluminium are preferable.

The shape of the negative-electrode collector is not particularly limited and may be appropriately selected depending on the intended purpose.

The size of the negative-electrode collector is not particularly limited and may be appropriately selected depending on the intended purpose, as long as the size is a size usable for a non-aqueous electrolyte electricity-storage element.

### <Production method of negative electrode>

The negative electrode can be produced by adding the binder, the thickening agent, the conduction auxiliary agent, a solvent, etc., according to the necessity, to the negative-electrode active material to form a negative electrode material in the form of slurry, applying the negative electrode material onto the negative-electrode collector, and drying the applied negative electrode material. As the solvent, any of the solvents listed as examples of the solvent for use in the production method of the positive electrode can be used.

Moreover, the negative-electrode active material, to which the binder, the thickening agent, the conduction auxiliary agent, etc., are added, may be subjected to roll molding as it is to form a sheet electrode, or to compression molding to form a pellet electrode, or may be formed into a thin film on the negative-electrode collector by a method, such as vapor deposition, sputtering, and plating.

### <Non-aqueous electrolyte>

The non-aqueous electrolyte includes a dinitrile compound, preferably includes an electrolyte salt in a non-aqueous solvent, and may further include other ingredients according to the necessity.

### -Dinitrile compound-

Examples of the dinitrile compound include succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,5-dimethyl-2,5-hexanedicarbonitrile, 2,6-dicyanoheptane, 2,7-dicyanooctane, 2,8-dicyanononane, and 1,6-dicyanodecane. The above-listed examples may be used alone or in combination. Among the above-listed examples, the dinitrile compound may be an aromatic dinitrile compound, and is preferably glutaronitrile, adiponitrile, or 2-methylglutaronitrile in view of high-voltage resistance and cycle properties.

An amount of the dinitrile compound relative to the non-aqueous electrolyte is 33% by mass or less, and particularly preferably 1% by mass or less. When the amount is 33% by mass or less, generation of gas can be suppressed without deteriorating properties of a storage element. When the amount is 1% by mass or less, generation of gas can be suppressed without deteriorating properties of a storage element even in a high voltage region.

### -Non-aqueous solvent-

The non-aqueous solvent is not particularly limited and may be appropriately selected depending on the intended purpose. The non-aqueous solvent is preferably an aprotic organic solvent.

As the aprotic organic solvent, a carbonate-based organic solvent, such as chain carbonate and cyclic carbonate, is used. The aprotic organic solvent is preferably a solvent of low viscosity. Among the above-listed solvents, chain carbonate is preferable because the chain carbonate has high dissolving power against an electrolyte salt.

Examples of the chain carbonate include dimethyl carbonate (DMC), diethyl carbonate (DEC), and methyl ethyl carbonate (EMC). Among the above-listed examples, dimethyl carbonate (DMC) is preferable.

Examples of the cyclic carbonate include propylene carbonate (PC), ethylene carbonate (EC), butylene carbonate (BC), vinylene carbonate (VC), and fluoroethylene carbonate (FEC).

When ethylene carbonate (EC) serving as the cyclic carbonate and dimethyl carbonate (DMC) serving as the chain carbonate are used in combination as a mixed solvent, a blending ratio between ethylene carbonate (EC) and dimethyl carbonate (DMC) is not particularly limited and may be appropriately selected depending on the intended purpose.

As the non-aqueous solvent, ester-based organic solvents, such as cyclic ester and chain ester, and ether-based organic solvents, such as cyclic ether and chain ether, may be used according to the necessity.

Examples of the cyclic ester include γ-butyrolactone (γ-BL), 2-methyl-γ-butyrolactone, acetyl-γ-butyrolactone, and γ-valerolactone.

Examples of the chain ester include alkyl propionate, dialkyl malonate, alkyl acetate (e.g., methyl acetate (MA) and ethyl acetate), and alkyl formate (e.g., methyl formate (MF) and ethyl formate).

Examples of the cyclic ether include tetrahydrofuran, alkyl tetrahydrofuran, alkoxy tetrahydrofuran, dialkoxy tetrahydrofuran, 1,3-dioxolan, alkyl-1,3-dioxolan, and 1,4-dioxolan.

Examples of the chain ether include 1,2-dimethoxyethane (DME), diethyl ether, ethylene glycol dialkyl ether, diethylene glycol dialkyl ether, triethylene glycol dialkyl ether, and tetraethylene glycol dialkyl ether.

### -Electrolyte salt-

As the electrolyte salt, a lithium salt is preferably used.

The lithium salt is not particularly limited and may be appropriately selected depending on the intended purpose, as long as the lithium salt is dissolved in a non-aqueous solvent to exhibit high ion conductivity. Examples of the lithium salt include lithium hexafluorophosphate (LiPF₆), lithium perchlorate (LiClO₄), lithium chloride (LiCl), lithium fluoroborate (LiBF₄), lithium hexafluoroarsenate (LiAsF₆), lithium trifluoromethanesulfonate (LiCF₃SO₃), lithium bistrifluoromethylsulfonyl imide (LiN(CF₃SO₂)₂), and lithium bispentafluoroethylsulfonyl imide (LiN(C₂F₅SO₂)₂). The above-listed examples may be used alone or in combination. Among the above-listed examples, LiPF6 or LiBF4 or a combination thereof are preferable because of a large amount of anions accumulated in a carbon electrode.

A concentration of the electrolyte salt is not particularly limited and may be appropriately selected depending on the intended purpose. The concentration of the electrolyte salt in the non-aqueous solvent is preferably 0.5 mol/L or greater but 6 mol/L or less. In view of both a capacity of the storage element and output, the concentration is more preferably 2 mol/L or greater but 4 mol/L or less.

### <Separator>

The separator is disposed between the positive electrode and the negative electrode in order to prevent a short circuit between the positive electrode and the negative electrode.

A material, shape, size, and structure of the separator are not particularly limited and may be appropriately selected depending on the intended purpose.

Examples of the material of the separator include paper (e.g., Kraft paper, vinylon blended paper, and synthetic pulp blended paper), cellophane, polyethylene graft membranes, polyolefin nonwoven fabric (e.g., polypropylene melt-flow nonwoven fabric), polyamide nonwoven fabric, glass fiber nonwoven fabric, and micropore membranes. Among the above-listed examples, a material having a porosity of 50% or greater is preferable in view of retention of the electrolyte.

As the shape of the separator, a nonwoven fabric having a high porosity is more preferable than a thin film-type having fine pores (micropores).

An average thickness of the separator is not particularly limited and may be appropriately selected depending on the intended purpose. The average thickness is preferably 20 µm or greater and more preferably 20 µm or greater but 100 µm or less. When the average thickness is less than 20 µm, a retention amount of the electrolyte may be small.

The size of the separator is not particularly limited and may be appropriately selected depending on the intended purpose, as long as the size is a size usable for a non-aqueous electrolyte electricity-storage element.

The structure of the separator may be a single-layer structure or a laminate structure.

### <Production method of non-aqueous electrolyte electricity-storage element>

The non-aqueous electrolyte electricity-storage element of the present disclosure is produced by assembling the positive electrode, the negative electrode, the non-aqueous electrolyte, and the separator into an appropriate shape. Moreover, other constitutional members, such as an outer tin, can be used according to the necessity. A method for assembling the non-aqueous electrolyte electricity-storage element is not particularly limited and may be appropriately selected from methods typically used.

The shape of the non-aqueous electrolyte electricity-storage element of the present disclosure is not particularly limited and may be appropriately selected from various shapes typically used depending on the intended use. Examples of the shape include a cylinder-type where sheet electrodes and a separator are spirally disposed, a cylinder-type having an inside-out structure, where pellet electrodes and a separator are combined, and a coin-type where pellet electrodes and a separator are laminated.

One embodiment of the present disclosure will be described with reference to drawings.

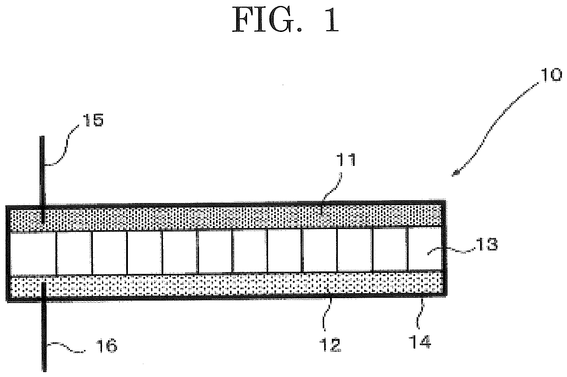

An overview of a structure of a non-aqueous electrolyte electricity-storage element 10 of the present disclosure will be described based on FIG. 1. The non-aqueous electrolyte electricity-storage element 10 illustrated in FIG. 1 includes a positive electrode 11, a negative electrode 12, a separator 13 retaining a non-aqueous electrolyte, an outer tin 14, a positive-electrode lead-out line 15, and a negative-electrode lead-out line 16, and may further include other members according to the necessity. Specific examples of the non-aqueous electrolyte electricity-storage element 10 include non-aqueous electrolyte secondary cells and non-aqueous electrolyte capacitors.

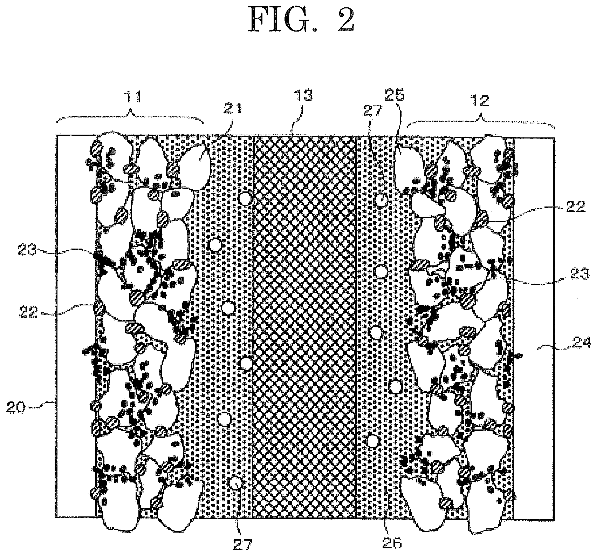

FIG. 2 is a schematic view illustrating one example of a basic structure of a three-dimensional network structure in the non-aqueous electrolyte electricity-storage element.

For example, the positive electrode 11 includes a positive-electrode collector 20 formed of aluminium, carbon 21 serving as a positive-electrode active material secured on the positive-electrode collector 20, a binder 22 for binding grains of the carbon 21 together, and a conduction auxiliary agent 23, which is represented by black circles, and is configured to apply conduction passes between the grains of the carbon 21.

For example, the negative electrode 12 includes a negative-electrode collector 24 formed of copper, a negative-electrode active material 25 formed of a carbonaceous material etc., secured on the negative-electrode collector 24, a binder 22 for binding grains of the negative-electrode active material 25 together, a conduction auxiliary agent 23, which is represented by black circles, and is configured to apply conduction passes between the grains of the negative-electrode active material 25.

A separator 13 and a non-aqueous electrolyte 26 are disposed between the positive electrode 11 and the negative electrode 12. A numerical reference 27 depicts ions. Charging and discharging are performed by inserting and eliminating ions into and from gaps between carbon layers.

In the case where LiPF₆ is used as an electrolyte, for example, a charging-discharging reaction of a dual intercalation non-aqueous electrolyte electricity-storage element is performed as follows. Charging is performed by inserting PF₆⁻ from the non-aqueous electrolyte to the positive electrode and inserting Li⁺ from the non-aqueous electrolyte to the negative electrode, and discharging is performed by eliminating PF6⁻ from the positive electrode to the non-aqueous electrolyte and eliminating Li⁺ from the negative electrode to the non-aqueous electrolyte.

### <Use>

Use of the non-aqueous electrolyte electricity-storage element of the present disclosure is not particularly limited, and the non-aqueous electrolyte electricity-storage element can be applied for various types of use. Examples of the use include power sources or back-up power sources for laptop computers, stylus-operated computers, mobile computers, electronic book players, mobile phones, mobile facsimiles, mobile photocopiers, mobile printers, headphone stereos, video movie players, liquid crystal televisions, handy cleaners, portable CD players, minidisk players, transceivers, electronic organizers, calculators, memory cards, mobile tape recorders, radios, motors, lighting equipment, toys, game equipment, clocks, strobes, cameras, electric bicycles, and electric tools.

### Examples

The present disclosure will be described in more detail by way of the following Examples. However, the present disclosure should not be construed as being limited to these Examples.

### (Example 1)

### <Production of positive electrode>

Porous carbon (CNovel (registered trademark), available from Toyo Tanso Co., Ltd.) was used as a positive-electrode active material, acetylene black (Denka Black powder, available from Denka Company Limited) was used as a conduction auxiliary agent, carboxymethyl cellulose (DAICEL 2200, available from Daicel Corporation) was used as a thickening agent, and acrylate-based latex (TRD202A, available from JSR Corporation) was used as a binder. The positive-electrode active material, the conduction auxiliary agent, the thickening agent, and the binder were blended at the ratio of 85.0:6.2:6.3:2.5 based on a mass ratio of the solid contents of the above-mentioned materials. To the resultant mixture, water was added to form a slurry, a viscosity of which was adjusted to an appropriate value. The resultant slurry was applied onto one side of an aluminium foil having a thickness of 20 µm by a doctor blade.

A coated amount after drying (a mass of the carbon active material powder in the coated positive electrode) was 3 mg/cm² on average. A cut piece having a diameter of 16 mm was stamped out of the resultant, to thereby produce a positive electrode.

The porous carbon (CNovel, available from Toyo Tanso Co., Ltd.) had a plurality of pores constituting a three-dimensional network structure, and had a BET specific surface area of 1,730 m²/g and a pore volume of 2.27 mL/g.

### <Production of negative electrode>

Artificial graphite (MAGD, available from Hitachi Chemical Co., Ltd.) was used as a negative-electrode active material, acetylene black (Denka Black powder, available from Denka Company Limited) was used as a conduction auxiliary agent, styrene-butadiene based rubber (SBR) (EX1215, available from Denka Company Limited) was used as a binder, and carboxylmethyl cellulose (DAICEL 2200, available from Daicel Corporation) was used as a thickening agent. The negative-electrode active material, the conduction auxiliary agent, the binder, and the thickening agent were blended at the ratio of 90.9:4.5:2.7:1.8 based on a mass ratio of the solid contents of the above-mentioned materials. To the resultant mixture, water was added to form a slurry, a viscosity of which was adjusted to an appropriate value. The resultant slurry was applied onto one side of a copper foil having a thickness of 18 µm by a doctor blade.

A coated amount after drying (a mass of the carbon active material powder in the coated negative electrode) was 10 mg/cm² on average. A cut piece having a diameter of 16 mm was stamped out of the resultant, to thereby produce a negative electrode.

### <Separator>

As a separator, 2 sheets were prepared. Each of the 2 sheets was obtained by stamping a piece having a diameter of 16 mm out of glass filter paper (GA100, available from ADVANTEC).

### <Non-aqueous electrolyte>

As a non-aqueous electrolyte, a 2 mol/L LiBF4 solution was prepared by using a mixed solvent of ethylene carbonate (EC) and methyl ethyl carbonate (EMC) at a volume ratio of 1:3. To the prepared LiBF4 solution, 2-methylglutaronitrile was added in a manner that a concentration thereof was to be 33% by mass, to thereby prepare a non-aqueous electrolyte.

### <Production of non-aqueous electrolyte electricity-storage element>

After vacuum drying the positive electrode, the negative electrode, and the separator for 4 hours at 150°C, a 2032-type coin cell was assembled in a dry argon glove box to obtain a non-aqueous electrolyte electricity-storage element.

"Cyclic voltammetry (CV)" was measured using the obtained non-aqueous electrolyte electricity-storage element in the following manner.

### <Cyclic voltammetry (CV) evaluation>

"Cyclic voltammetry (CV)" was measured by sweeping to 5.5 V at 23°C using an electrochromical analyzer ALS660C (available from Bioanalytical Systems (BAS)) and a spectroscope USB4000 (available from Ocean Optics).

### (Comparative Example 1)

A non-aqueous electrolyte electricity-storage element was obtained in the same manner as in Example 1, except that 2-methylglutaronitrile was not added to the LiBF4 solution.

"Cyclic voltammetry (CV)" was measured in the same manner as in Example 1 using the obtained non-aqueous electrolyte electricity-storage element.

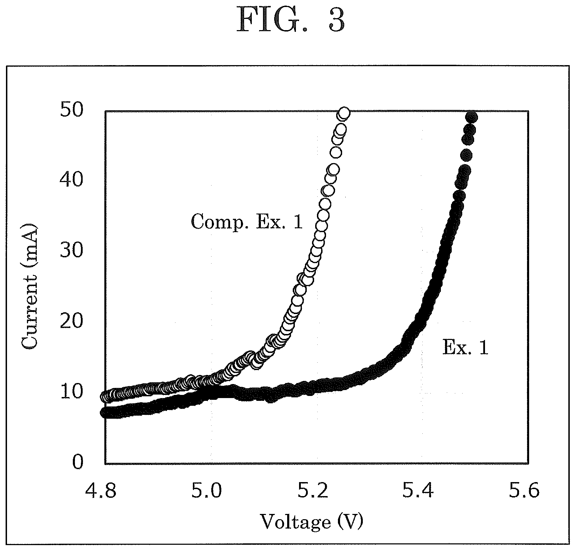

The results of the cyclic voltammetry (CV) measurement of Example 1 and Comparative Example 1 are presented in FIG. 3.

As presented in FIG. 3, it could be understood that the non-aqueous electrolyte electricity-storage element of Comparative Example 1, to which the dinitrile compound was not added, started to increase a current value at around 5.0 V, and decomposition of the electrolyte liquid started at around the above-mentioned voltage. On the other hand, it was understood that the non-aqueous electrolyte electricity-storage element of Example 1, to which the dinitrile compound was added, did not start to increase a current value until around 5.3 V and voltage resistance was improved. An influence of high oxidation potential of the dinitrile compound was assumed as the reason thereof. The dinitrile compound has significantly higher oxidation potential than cyclic carbonates or chain carbonates that are electrolyte solvent molecules. Since a nitrile group has extremely large electron-withdrawing properties, the dinitrile compound having two nitrile groups is a structure from which electrons are extremely hard to be detached. Therefore, it was considered that oxidation potential of the electrolyte as a whole was improved by adding the dinitrile compound to the carbonic acid esters, and voltage resistance was improved as presented in FIG. 3.

It was found from the results above that by adding a nitrile compound to a dual intercalation non-aqueous electrolyte electricity-storage element, the lithium secondary battery that could be charged and discharged could be obtained without causing decomposition of an electrolyte at high voltage and elution of a positive-electrode active material.

### (Example 2)

A non-aqueous electrolyte electricity-storage element was obtained in the same manner as in Example 1, except that the concentration of 2-methylglutaronitrile added was changed from 33% by mass to 1% by mass. Next, a "capacity," "discharge capacity retention rate," and "gas generation amount" were measured in the following manner.

### <Measurement of capacity and discharge capacity retention rate>

An automatic battery evaluation device of 1024B-7V0.1A-4 (available from Electro Field Co., Ltd.) was used for a charge-discharge test.

After charging the obtained non-aqueous electrolyte electricity-storage element to 4.4 V at 23°C and at the 10C rate, the non-aqueous electrolyte electricity-storage element was rested for 5 minutes, and then the non-aqueous electrolyte electricity-storage element was discharged to 2.0 V. The above-described cycle of processes was performed 200 times. The discharge capacity at the 10^{th} cycle was determined as a capacity value ("capacity") and a "discharge capacity retention rate" at the 200^{th} cycle relative to the initial capacity was calculated.

### <Measurement of gas generation amount>

After charging the obtained non-aqueous electrolyte electricity-storage element to 4.4 V at 23°C and at the 10C rate using a cell for measuring discharge gas pressure (device name: ECC-Press-DL, available from EL-CELL), the non-aqueous electrolyte electricity-storage element was rested for 5 minutes, and then the non-aqueous electrolyte electricity-storage element was discharged to 2.0 V. The above-described cycle of processes was performed 200 times. Then, a value obtained by converting the pressure of gas just after the 200 cycles into a volume was measured as a gas generation amount.

### (Example 3)

A non-aqueous electrolyte electricity-storage element was obtained in the same manner as in Example 1, except that the concentration of 2-methylglutaronitrile added was changed from 33% by mass to 5% by mass. Next, a "capacity," "discharge capacity retention rate," and "gas generation amount" were measured in the same manner as in Example 2.

### (Example 4)

A non-aqueous electrolyte electricity-storage element was obtained in the same manner as in Example 1, except that the concentration of 2-methylglutaronitrile added was changed from 33% by mass to 10% by mass. Next, a "capacity," "discharge capacity retention rate," and "gas generation amount" were measured in the same manner as in Example 2.

### (Example 5)

A non-aqueous electrolyte electricity-storage element was obtained in the same manner as in Example 1, except that the concentration of 2-methylglutaronitrile added was changed from 33% by mass to 20% by mass. Next, a "capacity," "discharge capacity retention rate," and "gas generation amount" were measured in the same manner as in Example 2.

### (Example 6)

Anon-aqueous electrolyte electricity-storage element was obtained in the same manner as in Example 1. Next, a "capacity," "discharge capacity retention rate," and "gas generation amount" were measured in the same manner as in Example 2.

### (Example 7)

A non-aqueous electrolyte electricity-storage element was obtained in the same manner as in Example 1, except that the 2-methylglutaronitrile added at the concentration of 33% by mass was changed to glutaronitrile added at a concentration of 10% by mass. Next, a "capacity," "discharge capacity retention rate," and "gas generation amount" were measured in the same manner as in Example 2.

### (Example 8)

A non-aqueous electrolyte electricity-storage element was obtained in the same manner as in Example 1, except that the 2-methylglutaronitrile added at the concentration of 33% by mass was changed to adiponitrile added at a concentration of 10% by mass. Next, a "capacity," "discharge capacity retention rate," and "gas generation amount" were measured in the same manner as in Example 2.

### (Comparative Example 2)

A non-aqueous electrolyte electricity-storage element was obtained in the same manner as in Comparative Example 1. Next, a "capacity," "discharge capacity retention rate," and "gas generation amount" were measured in the same manner as in Example 2.

### (Comparative Example 3)

A non-aqueous electrolyte electricity-storage element was obtained in the same manner as in Example 1, except that the concentration of 2-methylglutaronitrile added was changed from 33% by mass to 50% by mass. Next, a "capacity," "discharge capacity retention rate," and "gas generation amount" were measured in the same manner as in Example 2.

### (Comparative Example 4)

A non-aqueous electrolyte electricity-storage element was obtained in the same manner as in Example 1, except that the concentration of 2-methylglutaronitrile added was changed from 33% by mass to 34% by mass. Next, a "capacity," "discharge capacity retention rate," and "gas generation amount" were measured in the same manner as in Example 2.

The results of the "capacity," "discharge capacity retention rate," and "gas generation amount" of Examples 2 to 8 and Comparative Examples 2 to 4 are presented in Table 1 below.

**Table 1**

| | Dinitrile compound | | Evaluation results | | |
|---|---|---|---|---|---|
| | Type | Amount (% by mass) | Capacity (mAh/g) | Discharge capacity retention rate (%) | Gas generation amount (µL) |
| Ex. 2 | 2-Methylglutaronitrile | 1 | 72.7 | 97.9 | 35 |
| Ex. 3 | | 5 | 69.6 | 96.3 | 3 |
| Ex. 4 | | 10 | 65.4 | 94.2 | 5 |
| Ex. 5 | | 20 | 66.8 | 89.1 | 21 |
| Ex. 6 | | 33 | 67.5 | 68.7 | 43 |
| Ex. 7 | Glutaronitrile | 10 | 66.1 | 92.5 | 15 |
| Ex. 8 | Adiponitrile | 10 | 64.3 | 91.8 | 22 |
| Comp. Ex. 2 | None | 0 | 73.2 | 94.1 | 110 |
| Comp. Ex. 3 | 2-Methylglutaronitrile | 50 | 69.3 | 46.7 | 90 |
| Comp. Ex. 4 | | 34 | 58.6 | 55.4 | 85 |

It was found from Table 1 that Examples 2 to 8 significantly reduced the gas generation amounts compared to Comparative Example 2. The results above indicated that decomposition of the electrolyte was suppressed in the high voltage region by adding the dinitrile compound. Examining the capacities, moreover, Examples 2 to 8 had the capacities similar to the capacity of Comparative Example 2 to which the dinitrile compound was not added. Examining the discharge capacity retention rate, furthermore, any of Examples 2 to 8 had the retention rate of 60% or higher at the 200^{th} cycle of the 10C charging and discharging, although a slight reduction was observed in Example 6. The results above indicate that addition of the predetermined amount of the dinitrile compound does not hinder a charging and discharging process.

On the other hand, a reduction in the capacity retention rate was observed in Comparative Example 3 to which 50% by mass of the dinitrile compound was added and Comparative Example 4 to which 34% by mass of the dinitrile compound was added. It was assumed that intercalation of anions between layers of the positive electrode or intercalation of lithium as cations into the negative electrode was inhibited by adding the dinitrile compound in an amount that was equal to or greater than the predetermined amount into the electrolyte.

Since a significant reduction of the gas generation amount was similarly observed in Examples 7 and 8 where glutaronitrile or adiponitrile was used as the dinitrile compound, moreover, it was found that voltage resistance of the electrolyte solvent was improved by adding the dinitrile compound and a decomposition reaction could be suppressed.

### (Example 9)

Anon-aqueous electrolyte electricity-storage element was obtained in the same manner as in Example 2.

### (Example 10)

A non-aqueous electrolyte electricity-storage element was obtained in the same manner as in Example 6.

### (Comparative Example 5)

A non-aqueous electrolyte electricity-storage element was obtained in the same manner as in Comparative Example 2.

"Rate properties" were evaluated using the obtained non-aqueous electrolyte electricity-storage elements in the following manner.

### <Rate properties >

After charging the produced non-aqueous electrolyte electricity-storage element to 4.4 V at 23°C and at the 1C rate, the non-aqueous electrolyte electricity-storage element was rested for 5 minutes, and then the non-aqueous electrolyte electricity-storage element was discharged to 2.0 V. The above-described cycle of processes was performed 20 times. Next, after charging the non-aqueous electrolyte electricity-storage element to 4.4 V at the 5C rate, the non-aqueous electrolyte electricity-storage element was rested for 5 minutes, and then the non-aqueous electrolyte electricity-storage element was discharged to 2.0 V. The above-described cycle of processes was performed 50 times. After charging the non-aqueous electrolyte electricity-storage element to 4.4 V at the 10C rate, furthermore, the non-aqueous electrolyte electricity-storage element was rested for 5 minutes, and then the non-aqueous electrolyte electricity-storage element was discharged to 2.0 V. The above-described cycle of processes was performed 100 times. A discharge capacity at the 10^{th} cycle at each rate was determined as a capacity value. An appearing ratio of a capacity at the 10C rate relative to the capacity at the 1C rate was calculated as "rate properties." The results are presented in Table 2 below.

**Table 2**

| | Non-aqueous electrolyte electricity-storage element | Dinitrile compound | | Evaluation results | | | |
|---|---|---|---|---|---|---|---|
| | | Type | Amount (% by mass) | 1C (mAh/g) | 5C (mAh/g) | 10C (mAh/g) | Rate Properties (%) |
| Ex. 9 | Ex. 2 | 2-methylglutaronitrile | 1 | 73.4 | 62.3 | 57.9 | 78.9 |
| Ex.10 | Ex. 6 | | 33 | 72.8 | 63.1 | 58.5 | 80.4 |
| Comp. Ex. 5 | Comp. Ex. 2 | None | 0 | 73.2 | 62.8 | 58.1 | 79.4 |

As seen from the results of Table 2, Examples 9 and 10, to each of which the dinitrile compound was added, exhibited the similar capacities at all of the charging and discharging rates compared to Comparative Example 5 to which no dinitrile compound was added. Comparing between the rate properties, the rate properties were similar at all of the charging discharging rates. It was clear from the results above that decomposition of the electrolyte could be suppressed with maintaining low resistance of the battery cell without causing a reaction that would form a decomposition product that might increase resistance of the battery cell because of addition of the dinitrile compound.

### (Example 11)

A non-aqueous electrolyte electricity-storage element was obtained in the same manner as in Example 1.

### (Example 12)

A non-aqueous electrolyte electricity-storage element was obtained in the same manner as in Example 4.

### (Example 13)

A non-aqueous electrolyte electricity-storage element was obtained in the same manner as in Example 2.

### (Example 14)

A non-aqueous electrolyte electricity-storage element was obtained in the same manner as in Example 1, except that the concentration of 2-methylglutaronitrile added was changed from 33% by mass to 0.5% by mass.

### (Example 15)

A non-aqueous electrolyte electricity-storage element was obtained in the same manner as in Example 1, except that the concentration of 2-methylglutaronitrile added was changed from 33% by mass to 0.2% by mass.

### (Comparative Example 6)

A non-aqueous electrolyte electricity-storage element was obtained in the same manner as in Comparative Example 2.

### (Comparative Example 7)

A non-aqueous electrolyte electricity-storage element was obtained in the same manner as in Comparative Example 3.

### <Measurement of capacity, discharge capacity retention rate, and gas generation amount in high voltage region>

A "capacity," "discharge capacity retention rate," and "gas generation amount" were measured using the produced storage element in the same manner as in Example 2, except that the maximum voltage was to be 4.5 V. The results are presented in Table 3.

### <Measurement of input-output properties>

After charging the produced storage element to 4.5 V at 23°C and at the 0.2C rate, the storage element was rested for 5 minutes, and then the storage element was discharged to 2.0 V. The above-described cycle of processes was performed 10 times. Next, after charging the storage element to 4.5 V at the 1C rate, the storage element was rested for 5 minutes, and then the storage element was discharged to 2.0 V. The above-described cycle of processes was performed 20 times. Resistance of the laminate cell which had gone through charging and discharging was measured by AC 4-terminal sensing of 1 kHz. The obtained value was evaluated as "input-output properties." The small resistance value can prevent reductions of input and output. The results are presented in Table 3.

**Table 3**

| | Non-aqueous electrolyte electricity-storage element | Type of nitrile compound | Amount (% by mass) | Max 4.4V capacity (mAh/g) | Max 4.5V capacity (mAh/g) | Discharge capacity retention rate (%) | Gas generation amount (µL) | Input-output properties (mΩ) |
|---|---|---|---|---|---|---|---|---|
| Ex. 11 | Ex. 1 | 2-methyl glutaronitrile | 33 | 67.5 | 70.1 | 67.7 | 99 | 883 |
| Ex. 12 | Ex. 4 | | 10 | 65.4 | 73.3 | 89.5 | 34 | 699 |
| Ex. 13 | Ex. 2 | | 1 | 73.2 | 77.3 | 93.2 | 73 | 680 |
| Ex. 14 | - | | 0.5 | 73.1 | 77.6 | 94.6 | 135 | 684 |
| Ex. 15 | - | | 0.2 | 73.1 | 77.5 | 95.3 | 151 | 687 |
| Comp. Ex. 6 | Comp. Ex. 2 | None | 0 | 73.2 | 75.9 | 42.4 | 389 | 988 |
| Comp. Ex. 7 | Comp. Ex. 3 | 2-methyl glutaronitrile | 50 | 69.3 | 74.8 | 44.1 | 195 | 1,477 |

It was seen from the results of Table 3 that an improvement in the capacity was observed in any of the storage element systems by increasing the maximum voltage from 4.4 V to 4.5 V. In Comparative Example 6 to which the dinitrile compound was not added, however, the discharge capacity retention rate was extremely low in addition to the extremely large gas generation amount, although the capacity was improved. This indicated that decomposition of the electrolyte was accelerated in the high voltage region, i.e., 4.5 V. It was found that the properties as the battery cell were significantly impaired at high voltage.

In any of Examples 11 to 15 to each of which the dinitrile compound was added, on the other hand, generation of gas was suppressed. It was assumed that the dinitrile compound interacted with carbonic acid ester that was a constitutional ingredient of the electrolyte to improve oxidation potential and therefore voltage resistance was improved. Particularly in Examples 13 to 15 to each of which the dinitrile compound was added in an amount of 1% by mass or less, generation of gas was suppressed with maintaining a high discharge capacity retention rate.

In Comparative Example 7 to which the dinitrile compound was added in an amount of 50% by mass, on the other hand, a reduction in the capacity retention rate was observed. It was assumed that, similarly to Comparative Example 3 using the maximum voltage of 4.4 V, intercalation of anions between layers of the positive electrode or intercalation of lithium as cations into the negative electrode was inhibited by adding the dinitrile compound in an amount that was equal to or greater than the predetermined amount to the electrolyte.

By adding the dinitrile compound in an amount of 33% by mass or less, the generation of gas can be suppressed without impairing battery properties even in a high voltage region that is the maximum voltage of 4.5 V.

### (Example 16)

### <Production of laminate cell>

A positive electrode terminal formed of aluminium was attached to the positive electrode of Example 1 and a negative electrode terminal formed of nickel was attached to the negative electrode of Example 1 by ultrasonic welding. The positive electrode and negative electrode to each of which the terminal had been attached were laminated via a separator formed of cellulose, followed by vacuum drying for 4 hours at 150°C. The resultant laminate was enclosed in an aluminium laminate in a dry argon glove box. Next, an electrolyte prepared in the same manner as in Example 1 was injected, and heat fusion of the aluminium laminate was performed under the reduced pressure to thereby obtain a laminate cell.

### (Example 17)

A laminate cell was produced in the same manner as in Example 16, except that the electrolyte identical to the electrolyte of Example 4 was used.

### (Example 18)

A laminate cell was produced in the same manner as in Example 16, except that the electrolyte identical to the electrolyte of Example 2 was used.

### (Example 19)

A laminate cell was produced in the same manner as in Example 16, except that the electrolyte identical to the electrolyte of Example 14 was used.

### (Example 20)

A laminate cell was produced in the same manner as in Example 16, except that the electrolyte identical to the electrolyte of Example 15 was used.

### (Comparative Example 8)

A laminate cell was produced in the same manner as in Example 16, except that the electrolyte identical to the electrolyte of Comparative Example 2 was used.

### (Comparative Example 9)

A laminate cell was produced in the same manner as in Example 16, except that the electrolyte identical to the electrolyte of Comparative Example 3 was used.

### <Measurement of input-output properties>

After charging the produced laminate cell to 4.5 V at 23°C and at the 0.2C rate, the laminate cell was rested for 5 minutes, and then the laminate cell was discharged to 2.0 V. The above-described cycle of processes was performed 10 times. Next, after charging the laminate cell to 4.5 V at the 1C rate, the laminate cell was rested for 5 minutes, and then the laminate cell was discharged to 2.0 V. The above-described cycle of processes was performed 20 times. Resistance of the laminate cell which had gone through charging and discharging was measured by AC 4-terminal sensing of 1 kHz. The obtained value was evaluated as "input-output properties." The small resistance value can prevent reductions of input and output power. The results are presented in Table 4.

**Table 4**

| | Non-aqueous electrolyte | Type of nitrile compound | Amount (% by mass) | Input/output properties (mΩ) |
|---|---|---|---|---|
| Ex. 16 | Ex. 1 | 2-methylglutaronitrile | 33 | 883 |
| Ex. 17 | Ex. 4 | | 10 | 699 |
| Ex. 18 | Ex. 2 | | 1 | 680 |
| Ex. 19 | Ex. 14 | | 0.5 | 684 |
| Ex. 20 | Ex. 15 | | 0.2 | 687 |
| Comp. Ex. 8 | Comp. Ex. 2 | None | 0 | 988 |
| Comp. Ex. 9 | Comp. Ex. 3 | 2-methylglutaronitrile | 50 | 1,477 |

It was found from the results of Table 4 that in Examples 16 to 20 to each of which the dinitrile compound was added, the resistance values described as the input-output properties were reduced compared to Comparative Example 8 to which the dinitrile compound was not added. It was found that a reduction in the resistance value was particularly significant in Examples 18, 19, and 20 in each of which the addition amount of the dinitrile compound was small. It was assumed that the reason thereof was because decomposition of the electrolyte was suppressed without inhibiting movements of anions and cations with the dinitrile compound present in the electrolyte because a small amount of the dinitrile compound was added, and therefore formation of a coating film due to charging and discharging was slowed down, a resultant coating film became denser and thinner compared to the system where the dinitrile compound was not added, and as a result, resistance as the storage element was reduced.

Considering the results of an effect of suppressing a gas generation amount in a high voltage region, discharge capacity retaining rate, and input-output properties, an amount of the dinitrile compound added is particularly preferably 1% by mass or less.

It was found from the results above that by using an electrolyte having high-voltage resistance in a dual intercalation non-aqueous electrolyte electricity-storage element, the storage element having high safety can be provided without causing deteriorations of battery properties due to transition metal elution or generation of gas due to decomposition of an electrolyte even in a high voltage region.

## Claims

1. A non-aqueous electrolyte electricity-storage element comprising:
a positive electrode including a positive-electrode active material capable of inserting and eliminating anions;
a negative electrode including a negative-electrode active material;
a non-aqueous electrolyte; and
a separator that is disposed between the positive electrode and the negative electrode and retains the non-aqueous electrolyte,
wherein the non-aqueous electrolyte includes a dinitrile compound, and
an amount of the dinitrile compound is 33% by mass or less relative to the non-aqueous electrolyte,
wherein the positive-electrode active material includes a carbon material, and
a BET specific surface area of the carbon material is 50 m²/g or greater and a pore volume of the carbon material is 0.2 mL/g or greater but 2.3 mL/g or less.

2. The non-aqueous electrolyte electricity-storage element according to claim 1,
wherein the amount of the dinitrile compound is 1% by mass or less relative to the non-aqueous electrolyte.

3. The non-aqueous electrolyte electricity-storage element according to claim 1 or 2,
wherein the dinitrile compound is 2-methylglutaronitrile.

4. The non-aqueous electrolyte electricity-storage element according to any one of claims 1 to 3,
wherein the non-aqueous electrolyte includes LiBF₄.

5. The non-aqueous electrolyte electricity-storage element according to any one of claims 1 to 4,
wherein the negative-electrode active material is a carbon material.

## Patentansprüche

1. Elektrizitätsspeicherelement mit einem nicht wässerigen Elektrolyten, das umfasst:
eine positive Elektrode mit einem aktiven Material der positiven Elektrode, das in der Lage ist, Anionen einzufügen und zu entfernen;
eine negative Elektrode mit einem aktiven Material der negativen Elektrode;
einen nicht wässerigen Elektrolyten; und
einen Abscheider, der zwischen der positiven Elektrode und der negativen Elektrode angeordnet ist und den nicht wässerigen Elektrolyten hält,
wobei der nicht wässerige Elektrolyt eine Dinitrilverbindung umfasst, und
eine Menge der Dinitrilverbindung 33 Masse-% oder weniger relativ zum nicht wässerigen Elektrolyten ist,
wobei das aktive Material der positiven Elektrode ein Kohlenstoffmaterial umfasst, und
eine spezifische BET-Oberfläche des Kohlenstoffmaterials 50 m²/g oder größer ist und ein Porenvolumen des Kohlenstoffmaterials 0,2 ml/g oder größer, aber 2,3 ml/g oder geringer ist.

2. Elektrizitätsspeicherelement mit einem nicht wässerigen Elektrolyten nach Anspruch 1,
wobei die Menge der Dinitrilverbindung 1 Masse-% oder weniger relativ zum nicht wässerigen Elektrolyten ist.

3. Elektrizitätsspeicherelement mit einem nicht wässerigen Elektrolyten nach Anspruch 1 oder 2,
wobei die Dinitrilverbindung 2-Methylglutaronitril ist.

4. Elektrizitätsspeicherelement mit einem nicht wässerigen Elektrolyten nach einem der Ansprüche 1 bis 3,
wobei der nicht wässerige Elektrolyt LiBF₄ umfasst.

5. Elektrizitätsspeicherelement mit einem nicht wässerigen Elektrolyten nach einem der Ansprüche 1 bis 4,
wobei das aktive Material der negativen Elektrode ein Kohlenstoffmaterial ist.

## Revendications

1. Élément de stockage d'électricité à électrolyte non aqueux, comprenant :
une électrode positive incluant un matériau actif d'électrode positive capable d'insérer et d'éliminer des anions ;
une électrode négative incluant un matériau actif d'électrode négative ;
un électrolyte non aqueux ; et
un séparateur qui est disposé entre l'électrode positive et l'électrode négative et retient l'électrolyte non aqueux,
dans lequel l'électrolyte non aqueux inclut un composé dinitrile, et
une quantité du composé dinitrile est 33 % en masse ou moins relativement à l'électrolyte non aqueux,
dans lequel le matériau actif d'électrode positive inclut un matériau carbone, et
une surface spécifique BET du matériau carbone est 50 m²/g ou plus et un volume des pores du matériau carbone est 0,2 mL/g ou plus mais 2,3 mL/g ou moins.

2. Élément de stockage d'électricité à électrolyte non aqueux selon la revendication 1,
dans lequel la quantité du composé dinitrile est 1 % en masse ou moins relativement à l'électrolyte non aqueux.

3. Élément de stockage d'électricité à électrolyte non aqueux selon la revendication 1 ou 2,
dans lequel le composé dinitrile est 2-méthylglutaronitrile.

4. Élément de stockage d'électricité à électrolyte non aqueux selon l'une quelconque des revendications 1 à 3,
dans lequel l'électrolyte non aqueux inclut LiBF₄.

5. Élément de stockage d'électricité à électrolyte non aqueux selon l'une quelconque des revendications 1 à 4,
dans lequel le matériau actif d'électrode négative est un matériau carbone.
